# EUROPÄISCHE PATENTSCHRIFT

(11) **EP 0 629 544 B1**
(45) Veröffentlichungstag und Bekanntmachung des Hinweises auf die Patenterteilung: **11.06.1997**
(21) Anmeldenummer: 94108052.5
(22) Anmeldetag: 26.05.1994
(51) Int. Cl.: B62H 3/02

(54) **Parkhalter für Zweiräder, insbesondere für Fahrräder**
Parking stand for twowheelers, especially for bicycles
Support de stationnement pour véhicules à deux roues, en particulier pour bicyclettes

(30) Priorität: 14.06.1993 DE 9308814 U
(43) Veröffentlichungstag der Anmeldung: 21.12.1994
(73) Patentinhaber: HESS FORM + LICHT GmbH & CO., D-78050 Villingen-Schwenningen (DE)
(72) Erfinder: Fischer, Georg, D-78050 Villingen-Schwenningen (DE); Schlude, Udo, D-78050 Villingen-Schwenningen (DE); Hess, Jürgen, D-78048 Villingen-Schwenningen (DE)
(74) Vertreter: Neymeyer, Franz, Dipl.-Ing. (FH)

(56) Entgegenhaltungen:
- WO-A-92/11174
- DE-A- 3 930 506
- US-A- 3 841 119

## Beschreibung

Die Erfindung betrifft einen Parkhalter für Zweiräder, insbesondere für Fahrräder, bestehend aus einem am Rahmen des Zweirades festsitzend befestigten, nach unten gerichteten Stützelement und einer am Boden ortsfest verankerten Stützvorrichtung, wobei das Stützelement und die Stützvorrichtung bei mit wenigstens einem Rad auf dem Boden stehenden Zweirad miteinander in Eingriff bringbar sind.

Eine Vorrichtung solcher Art ist aus dem Dokument WO-A-9 211 174 bekannt. Diese Vorrichtung dient aber hauptsächlich zum schließbaren Sichern eines mobilen Objekts. Im engeren Sinne handelt es sich um eine Vorrichtung zum mechanischen Absichern von Fahrrädern, Motorrädern, Koffern, Skiern od. dgl. gegen Diebstahl.

Dabei ist es unerläßlich, daß diese Vorrichtung im geschlossenen Zustand den darin befestigten Gegenstand, d.h. einen Teil des zu sichernden Fahrrades, Motorrades od. dgl. unlösbar umschließt und nur dann wieder freigibt, wenn die Verriegelungsvorrichtung entfernt wird.

Dazu ist auf das obere Ende der vertikalen Haltestange bzw. des Ständers, die bzw. der selbst auch noch längen- bzw. höhenverstellbar sein kann, eine mit einem Schließmechanismus versehene Abschließvorrichtung aufgesetzt.

Diese Abschließvorrichtung weist zwei im Abstand voneinander und parallel zueinander verlaufend auf einer Sockelplatte befestigte vertikale Riegelwände auf, in welche ein Schloßzylinder einsetzbar ist. Zu diesem Zweck sind diese beiden Riegelplatten mit koaxial zueinander verlaufenden Durchbrüchen versehen.

Zwischen diese beiden Riegelplatten ist eine Kupplungszunge einsetzbar, die Bestandteil einer Rohrschelle ist. Diese Rohrschelle umfaßt ein Rahmenrohr z.B. eines Fahrrades oder eines Motorrades. Damit der Schloßzylinder auch durch die Kupplungszunge hindurch geführt werden kann, ist diese mit einer Bohrung versehen.

Verwendbar ist diese bekannte Abschließvorrichtung nur gemeinsam mit dem Schloßzylinder; ohne diesen kann man eine standsichere Verbindung zwischen dem Fahrrad und dem Ständer nicht herstellen.

Dieser Schloßzylinder oder wenigstens ein passender Querbolzen muß stets separat mitgeführt werden. Dabei ist es schwierig, das Fahrrad entsprechend obiger Beschreibung so zu positionieren, daß die Querbohrungen der Riegelplatten und der Kupplungszunge des Stützelementes eine koaxiale Lage einnehmen und es in dieser Lage zu halten, bis der Schloßzylinder oder der Sicherungsbolzen durch die Bohrungen hindurch gesteckt ist. Diese Problematik wird bei mehreren nebeneinander aufgestellten Standsäulen noch verstärkt, da bei dicht nebeneinander stehenden Fahrrädern die Zugänglichkeit zu den Querbohrungen erheblich schlechter und damit das Durchstecken des Schloßzylinders oder Querbolzens noch schwieriger wird.

Demgemäß liegt der Erfindung die Aufgabe zugrunde, einen Parkhalter der eingangs genannten Art so zu verbessern, daß das Stützelement und die Standsäule in einfacher Weise miteinander in Eingriff gebracht werden können, ohne daß zusätzliche Sicherungselemente, wie beispielsweise ein Sicherungsbolzen, ein Schloßzylinder od. dgl. notwendig sind, um das geparkte Fahrrad in seiner Parkstellung sicher zu halten. Vor allem soll es möglich sein, das Fahrrad durch das Stützorgan und eine passende Aufnahmevorrichtung so in seiner Parkstellung zu sichern, daß es weder umfallen noch sich in Vorwärts- oder Rückwartsrichtung bewegen kann.

Erfindungsgemäß wird die Aufgabe dadurch gelöst, daß das Stützelement ein im wesentlichen vertikal verlaufendes stab-, platten- oder bügelartiges Stützorgan aufweist und daß die Stützvorrichtung mit wenigstens einem im wesentlichen vertikal verlaufenden, oberseitig offenen Aufnahmerohr versehen ist, in welches das Stützorgan unmittelbar und mit geringem Spiel passend von oben einsteckbar ist, so daß das Aufnahmerohr das Stützorgan horizontal allseitig umfaßt.

Durch die erfindungsgemäße Ausgestaltung des Parkhalters wird vorteilhaft erreicht, daß das am Fahrradrahmen befestigte Stützelement mit seinem vertikal nach unten gerichteten Stützorgan in einfacher Weise mit dem Aufnahmerohr der Stützvorrichtung in Eingriff bringbar ist. Es sind keine zusätzlichen Sicherungselemente, wie beispielsweise ein Sicherungsbolzen, notwendig, um das geparkte Fahrrad in seiner Parkstellung zu halten. Das Fahrrad wird durch das Stützorgan im Aufnahmerohr festgehalten und ist ohne besondere Sicherung gegen Kippen und auch gegen Verschieben gesichert.

Durch die Ausgestaltung gemäß Anspruch 2 wird vorteilhaft erreicht, daß das Stützelement an unterschiedlichen Fahrradrahmen, mit unterschiedlichem Neigungswinkel des vorderen unteren Rahmenrohres anpassbar ist. Durch die Schwenkbarkeit des Stützzapfens kann dieser bei unterschiedlichen Neigungswinkeln des Rahmenrohres beliebig in eine senkrechte Lage gebracht werden. Der Stützzapfen ist dabei in seiner jeweiligen zum Stützelement eingestellten Winkellage mittels einer Klemmschraubverbindung vertikal feststellbar, so daß er, beispielsweise beim Einfädeln in das Aufnahmerohr, nicht unbeabsichtigt aus seiner Vertikallage verschwenkt werden kann.

Durch die erfindungsgemäße Ausgestaltung gemäß Anspruch 3 wird erreicht, daß das Stützorgan bei unterschiedlichen Neigungswinkeln des Rahmenrohres ohne zusätzliche Einstellarbeiten mit dem zugehörigen Aufnahmerohr in Eingriff bringbar ist. Der mittlere Neigungswinkel des vorderen unteren Rahmenrohres beträgt etwa 45°. Für diesen Neigungswinkel des Rahmenrohres verläuft die Quermittelebene der Stützplatte in der Vertikalen. Bei verschiedenen Ausführungsformen von Fahrradrahmen schwankt dieser Neigungswinkel zwischen etwa 40° und 50°, so daß die Quermittelebene der Stützplatte um bis zu 5° in die eine oder andere Richtung zur Vertikalen geneigt sein kann. Durch den schrägen Verlauf der Vorder- und Hinterkante der Stützplatte von etwa 5° zur Quermittelebene der Stützplatte, wobei diese von oben nach unten aufeinander zu verlaufen, ist gewährleistet, daß die Stützplatte auch bei einem gegenüber der Vertikalen um 5° geneigten Verlauf ohne zu klemmen mit dem entsprechenden Aufnahmerohr in Eingriff bringbar ist.

Durch den seitlichen Versatz der Stützplatte gemäß Anspruch 7 wird das Einfädeln des Stützorgans in das zugehörige Aufnahmerohr erleichtert, da die Sichtverhältnisse von oben auf das Stützorgan und das Aufnahmerohr wesentlich verbessert sind. Eine Person hat beim Parken des Fahrrades von oben eine bessere Übersicht, da das Stützorgan und die Stützvorrichtung nicht vollständig vom Rahmenrohr verdeckt sind. Der seitliche Versatz ist dabei, je nach Anordnung des Stützelementes am Rahmenrohr, im wesentlichen durch den Abstand des beim Treten seitlich am Stützelement vorbeilaufenden Pedalhebels begrenzt und beträgt einen maximalen Wert, der etwa der halben Rahmenrohrbreite entspricht.

Weitere vorteilhafte Ausgestaltungen der Erfindung, insbesondere vorteilhafte Anordnungen der Aufnahmerohre an der Stützvorrichtung sind den Ansprüchen 5 bis 12 entnehmbar.

Im folgenden wird die Erfindung anhand der Zeichnung näher erläutert. Es zeigt:
- Fig. 1: ein Fahrrad mit dem erfindungsgemäßen Parkhalter in Seitenansicht;
- Fig. 2: einen Parkhalter mit Rahmenrohr in perspektivischer Darstellung;
- Fig. 3: ein Stützelement des Parkhalters aus Fig. 2 in Frontansicht;
- Fig. 4: eine zweite Ausführungsform des Parkhalters im Teilschnitt;
- Fig. 5: eine Ansicht V aus Fig. 4;
- Fig. 6: eine weitere Ausführungsform des Parkhalters im Teilschnitt;
- Fig. 7: einen Teilschnitt VII - VII aus Fig. 6;
- Fig. 8: einen Schnitt VIII - VIII aus Fig. 6;
- Fig. 9: drei im Boden verankerte Stützvorrichtungen;
- Fig. 10: drei im Boden verankerte Stützvorrichtungen mit Sicherungsbügel;
- Fig. 11: einen Rohrrahmen mit drei Aufnahmerohren;
- Fig. 12: zwei Rohrrahmen mit jeweils einem Aufnahmerohr;
- Fig. 13: einen Rohrrahmen mit zwei Aufnahmerohren;
- Fig. 14: eine weitere Ausführungsform der Stützvorrichtung;
- Fig. 15: eine Draufsicht XV aus Fig. 14;
- Fig. 16: einen Rohrrahmen mit versetzt zueinander angeordneten Aufnahmerohren;
- Fig. 17: eine Draufsicht XVII aus Fig. 16;
- Fig. 18: eine ringförmige Stützvorrichtung mit Aufnahmerohren in Seitenansicht;
- Fig. 19: eine Draufsicht XIX aus Fig. 18;
- Fig. 20: eine weitere Ausführungsform der Stützvorrichtung mit drei Aufnahmerohren;
- Fig. 21: eine Seitenansicht XXI aus Fig. 20.

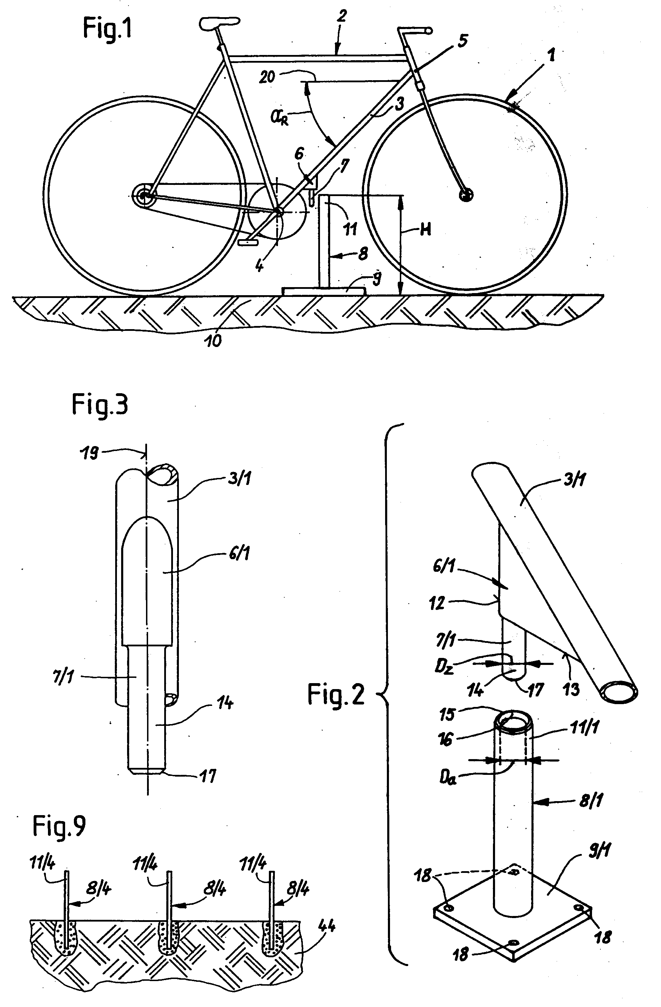

Fig. 1 zeigt ein Fahrrad 1 mit einem erfindungsgemäßen Parkhalter. Das Fahrrad 1 weist einen Rahmen 2 auf, dessen vorderes unteres Rahmenrohr 3 eine Verbindung zwischen dem Tretlager 4 und dem Lenkkopf 5 des Fahrrades 1 herstellt. An dem Rahmenrohr 3 ist ein Stützelement 6 angeordnet, welches ein vertikal nach unten gerichtetes Stützorgan 7 aufweist. Des weiteren zeigt Fig. 1 eine vertikal verlaufende Stützvorrichtung 8, welche an ihrem unteren Ende mit einer Standplatte 9 versehen ist. Durch die Standplatte 9 wird die Stützvorrichtung 8 in ihrer senkrechten Lage sicher gehalten, wobei zur Erhöhung der Standfestigkeit die Standplatte 9 mit dem Untergrund 10, beispielsweise Beton, verschraubbar ist. Die Stützvorrichtung 8 bildet mit ihrem oberen Ende ein Aufnahmerohr 11, in welches das Stützorgan 7 mit geringem Spiel passend einsteckbar ist. Die Anordnung des Stützelementes 6 am Rahmenrohr 3 zwischen dem Tretlager 4 und dem Lenkkopf 5 des Fahrrades 1 ist so gewählt, daß das Stützorgan 7 von unten frei zugänglich ist. Die Stützvorrichtung 8 mit ihrem Aufnahmerohr 11 weist eine Gesamthöhe **H** auf, die auf die Anordnung des Stützelementes 6 am Rahmenrohr 3 derart abgestimmt ist, daß bei mit dem Aufnahmerohr 11 in Eingriff gebrachten Stützorgan 7 das Fahrrad 1 mit beiden Rädern auf dem Untergrund 10 steht.

Durch das Einstecken des Stützorgans 7 in das Aufnahmerohr 11 der Stützvorrichtung 8 wird zwischen dem Stützelement 6 und der Stützvorrichtung 8 eine formschlüssige Verbindung hergestellt. Da das Stützelement 6 fest mit dem Rahmenrohr 3 verbunden ist, ist das Fahrrad somit gegen Kippen und auch gegen eine Verschiebung in Längsrichtung des Fahrrades 1 gesichert.

Fig. 2 zeigt eine Ausführungsform des erfindungsgemäßen Parkhalters, bei welchem das Stützelement 6/1 mit dem unteren Rahmenrohr 3/1 durch eine Schweiß- oder Lötverbindung fest verbunden ist. Das Stützelement 6/1 weist in Seitenansicht einen dreiecksförmigen Zuschnitt auf, wobei die Vorderkante 12 des Stützelementes 6/1 etwa vertikal und die Unterkante 13 des Stützelementes 6/1 etwa horizontal verläuft. Im Bereich der Vorderkante 12 ist unterhalb des Stützelementes 6/1 ein Stützorgan 7/1 in Form eines Stützzapfens 14 angeordnet, der vertikal verlaufend fest mit dem Stützelement 6/1 verbunden ist. Das untere Ende des Stützzapfens 14 ist mit einer umlaufenden Fase 17 versehen.

Unterhalb des Stützzapfens 14 ist eine Stützvorrichtung 8/1 dargestellt, welche mit ihrem oberen Endabschnitt ein Aufnahmerohr 11/1 bildet. Die Oberkante 15 des Aufnahmerohres 11/1 ist an seiner Innenseite mit einer umlaufenden kegeligen Einsenkung 16 versehen. Durch die kegelige Einsenkung 16 des Aufnahmerohres 11/1 und durch die umlaufende Fase 17 des Stützzapfens 14 wird das Einfädeln des Stützzapfens 14 in das Aufnahmerohr 11/1 erheblich erleichtert. Des weiteren ist der Außendurchmesser **D**_{**z**} des Stützzapfens 14 etwas kleiner gewählt als der Innendurchmesser **D**_{**a**} des Aufnahmerohres 11/1, so daß der Stützzapfen 14 im Aufnahmerohr 11/1 mit geringem Spiel von etwa 0,5 bis 2 mm einsteckbar ist. Dadurch wird ebenfalls erreicht, daß der Stützzapfen 14 auch beim Anheben nur des Vorderrades, wodurch er aus seiner vertikalen Lage gebracht wird, noch einfach ohne zu klemmen in das Aufnahmerohr 11/1 einführbar ist.

Die Stützvorrichtung 8/1 ist an ihrem unteren, bodenseitigen Ende mit einer etwa quadratischen Standplatte 9/1 versehen, welche in ihren vier Eckbereichen mit jeweils einer Durchgangsbohrung 18 versehen ist. Dadurch wird ermöglicht, die Stützvorrichtung 8/1 auf einem festen Untergrund zu verschrauben, so daß die Stützvorrichtung 8/1 beim Einstecken des Stützzapfens 14 sicher in ihrer vertikalen Lage gehalten ist.

Wie aus Fig. 3 ersichtlich ist, sind sowohl das Stützelement 6/1 als auch der Stützzapfen 14 symmetrisch zum Rahmenrohr 3/1 angeordnet, wobei das Rahmenrohr 3/1 in der vertikalen Längsmittelebene 19 des Rahmens bzw. des Fahrrades liegt. Des weiteren verläuft das Rahmenrohr 3/1 bzw. 3 (Fig. 1) unter einem Winkel α_{**R**} zur Horizontalen 20, der bei verschiedenen Rahmenkonstruktionen von Fahrrädern im Bereich von ca. 40° bis 50 ° liegt. Die Dreiecksform des Stützelementes 6/1 ist diesem Neigungswinkel α_{**R**} derart angepaßt, daß der Stützzapfen 6/1 stets einen vertikalen Verlauf aufweist.

Es versteht sich, daß die Dreiecksform des Stützelementes 6/1 für verschiedene Neigungswinkel α_{**R**} auch unverändert bleiben kann und lediglich der Stützzapfen 14 entsprechend vertikal ausgerichtet am Stützelement 6/1 angeordnet ist.

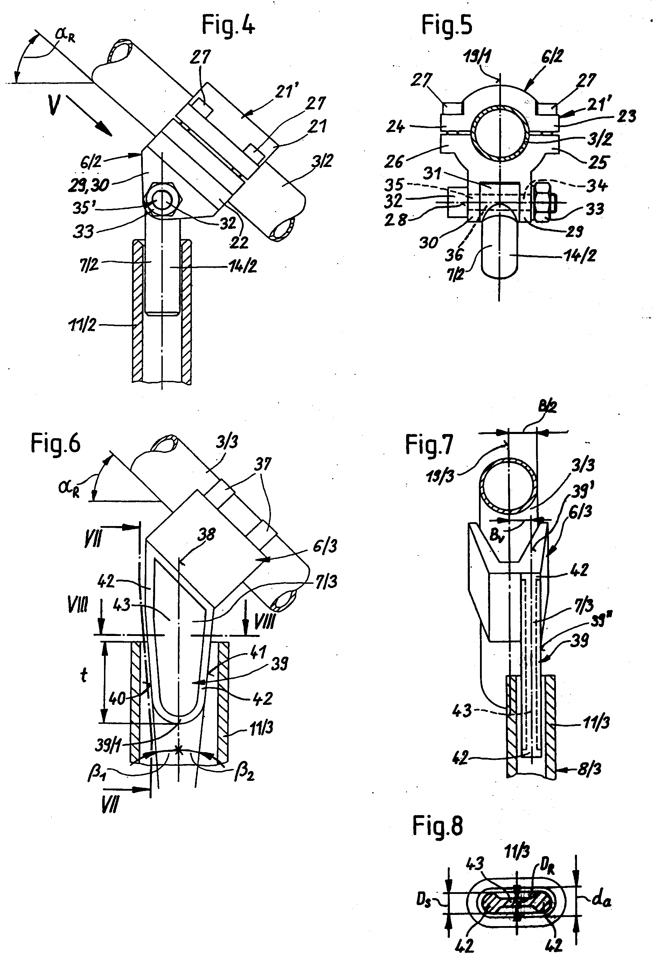

Fig. 4 zeigt eine weitere Ausführungsform des Parkhalters, welcher ein Stützelement 6/2 aufweist, das zur Befestigung am Rahmenrohr 3/2 mit einer Rohrschelle 21', bestehend aus einer oberen Rohrschellenhälfte 21 und einer unteren Rohrschellenhälfte 22, versehen ist. Die beiden Rohrschellenhälften 21, 22 weisen jeweils symmetrisch zur vertikalen Längsmittelebene 19/1 des Rahmenrohres 3/2 angeordnete Befestigungsflansche 23, 24 bzw. 25, 26 auf (Fig.5). Die Rohrschellenhälften 21, 22 sind über ihre Befestigungsflansche 23 bis 26 mittels jeweils zweier Schrauben 27 miteinander verschraubt, wobei sie das Rahmenrohr 3/2 klemmend umschließen. Die Schellenhälfte 21, 22 weisen im montierten Zustand im Bereich ihrer Befestigungsflansche 23 bis 26 einen Abstand von etwa 1 mm voneinander auf, so daß beim ein fester Sitz des Stützelementes 6/2 am Rahmenrohr 3/2 gewährleistet ist.

Das Stützelement 6/2 weist als Stützorgan 7/2 einen Stützzapfen 14/2 auf, welcher im montierten Zustand um eine quer zur vertikalen Zweiradlängsmittelebene 19/1 verlaufende Schwenkachse 28 schwenkbar gelagert ist. Zur schwenkbaren Aufnahme des Stützzapfens 14/2 ist die untere Schellenhälfte 22 mit zwei im Abstand voneinander und symmetrisch zur Längsmittelebene 19/1 angeordneten parallelen Schwenklaschen 29 und 30 versehen, welche jeweils eine koaxial zur Schwenkachse 28 verlaufende Lagerbohrung 34 bzw. 35 aufweisen. Der Stützzapfen 14/2 weist an seinem oberen Ende einen Lagerkopf 31 mit einer Schwenkbohrung 36 auf, der passend zwischen die beiden Schwenklaschen 29, 30 hineinragt. Der Stützzapfen 14/2 wird mit seinem Schwenkkopf 31 zwischen den Schwenklaschen 29, 30 mittels einer Schraubverbindung 35' bestehend aus einer Schraube 32 und einer Mutter 33 klemmend gehalten, wobei die Schraube 32 die Lagerbohrungen 34, 35 der Schwenklaschen 29, 30 und die Schwenkbohrung 36 des Schwenkkopfes 31 gemeinsam durchragt. Durch Lösen der Schraubverbindung 35' ist der Stützzapfen 14/2 in der vertikalen Längsmittelebene 19/1 um wenigstens 5° in beide Richtungen schwenkbar und durch Festziehen der Schraubverbindung 35' in jeder gewählten Schwenkposition feststellbar. Der Parkhalter gemäß Fig. 4 weist ebenfalls ein Aufnahmerohr 11/2 auf, in welches der Stützzapfen 14/2 mit Spiel passend einsteckbar ist. Durch die Schwenkbarkeit des Stützzapfens 14/2 gemäß den Fig. 4, 5 ist es in einfacher Weise möglich, die vertikale Lage des Stützzapfens 14/1 in Abhängigkeit vom Neigungswinkel α_{**R**} des Rahmenrohres 3/2 einzustellen, so daß er stets in das vertikal verlaufende Aufnahmerohr 11/2 (Fig. 4) einsteckbar ist.

Bei einer weiteren Ausführungsform gemäß, den Fig. 6, 7 und 8, weist der Parkhalter ein Stützelement 6/3 und ein Stützorgan 7/3 auf, welche als einstückiges Gußstück ausgeführt sind. Das Stützelement 6/3 ist in Form eines trapezförmiges U-Profils am Rahmenrohr 3/3 mittels zweier Spannbänder 37 ist das Stützelement 6/3 festsitzend gehalten. Durch den rahmenrohrseitig offenen trapezförmigen Querschnitt des Stützelementes 6/3 ist dieses zur Befestigung an Rahmenrohren unterschiedlicher Durchmesser geeignet, ohne daß es einer Anpassung des Stützelementes an die unterschiedlichen Querschnitte bedarf. Das Stützorgan 7/3 ist als Stützplatte 39 ausgebildet, die mit ihrer Stützplatten-Quermittelebene 38 bei stehenden Fahrrad im wesentlichen vertikal nach unten verläuft. Die Stützplatte 39 ist mit ihrer Stützplatten-Längsmittelebene 39' um eine Wert **B**_{**V**} seitlich zur Längsmittelebene 19/3 des Rahmenrohres 3/3 versetzt und parallel zu dieser verlaufend angeordnet, wobei der Wert **B**_{**V**} so bemessen ist, daß die Stützplatte mit ihrer äußeren Begrenzungskante 39'' noch unterhalb des Rahmenrohres 3/3 liegt. Als maximaler Wert **B**_{**V**} für den seitlichen Versatz ist die halbe Breite **B/2** des Rahmenrohres 3/3 vorgesehen, so daß Kollisionen mit dem stützplattenseitigen Tretarm des Tretpedals des Fahrrades beim Treten sicher ausgeschlossen sind. Der seitliche Versatz der Stützplatte 39 hat den Vorteil, daß die Sichtverhältnisse von oben beim Einfädeln der Stützplatte 39 in das entsprechende Aufnahmerohr 11/3 wesentlich verbessert sind, da sowohl die Stützplatte 39 als auch das Aufnahmerohr 11/3 nicht vom Rahmenrohr 3/3 vollständig verdeckt sind.

Anstatt der seitlich neben der Längsmittelebene 19/3 gewählten Anordnung, kann die Stützplatte 39 trotzdem auch symmetrisch zur Längsmittelebene 19/3 angeordnet sein.

Die Vorderkante 40 und die Hinterkante 41 der Stützplatte 39 bilden zur Stützplatten-Quermittelebene 38 wenigstens im Bereich der Eintauchtiefe **t**, mit welcher die Stützplatte 39 in das Aufnahmerohr 11/3 beim Parken eingreift, jeweils einen Winkel **β1** bzw. **β2** von etwa 5°. Die Vorderkante 40 und die Hinterkante 41 verlaufen dabei von oben nach unten aufeinander zu, wobei die Stützplatte 39 an ihrem unteren Ende 39/1 etwa halbkreisförmig ausgebildet ist. Die Stützplatte 39 weist, wie in Fig. 8 dargestellt ist, einen etwa doppel-T-förmigen Querschnitt auf. D.h. der umlaufende Kantenbereich 42 der Stützplatte weist eine größere Dicke **D**_{**S**} auf als der innere als eine Art Versteifungsrippe 43 ausgebildete zentrale Stützplattenbereich 43.

Des weiteren ist gemäß der Ausführungsform nach den Fig. 6 bis 8 eine Stützvorrichtung 8/3 mit einem Aufnahmerohr 11/3 vorgesehen, das eine auf den Stützplattenquerschnitt abgestimmte längliche, ovale Querschnittsform aufweist (Fig. 8). Insgesamt ist die Stützplatte 39 mit ihren maximalen Außenmaßen so auf den ovalen Innenquerschitt des Aufnahmerohres 11/3 der Stützvorrichtung 8/3 abgestimmt, daß sie im Aufnahmerohr mit einem Spiel von etwa 0,5 bis 2 mm einsteckbar ist.

Im Konkreten Ausführungsbeispiel beträgt die Dicke **D**_{**R**} der Versteifungsrippe 43 etwa 8 mm und die Dicke **D**_{**S**} des Kantenbereiches 42 etwa 16 mm. Demgegenüber beträgt die lichte Weite **d**_{**a**} des Aufnahmerohres 11/3 etwa 17 mm. Die Eintauchtiefe **t** beträgt bei entsprechender Anordnung des Stützelementes 6/3 am Rahmenrohr 3/3 und entsprechender Wahl der Höhe der Stützvorrichtung 8/3 und auf dem Untergrund stehenden Fahrrad etwa 50 bis 60 mm.

Durch die Ausgestaltung der Stützplatte wird auf besonders einfache Weise erreicht, daß bei unterschiedlichem Anstellwinkel α_{**R**} des unteren Rahmenrohres 3/3 ohne zusätzliche Einstellarbeiten am Stützorgan 7/3 die Stützplatte 39 in ein vertikales Aufnahmerohr 11/3 einer Stützvorrichtung 8/3 einsteckbar ist.

Bei einer weiteren Ausführungsform des Stützelementes (nicht in der Zeichnung dargestellt) ist als Stützorgan ein Drahtbügel vorgesehen, dessen Formgebung etwa der Außenkontur der Stützplatte 39 entspricht. Die Drahtstärke beträgt etwa 16 mm, so daß sich insgesamt dieselben Eingriffsverhältnisse ergeben wie bei der Stützplattenausführung gemäß den Fig. 6 bis 8.

Bei den Aufnahmerohren 11, 11/1 bis 11/3 ist anstatt eines ringförmigen bzw. ovalen Querschnittes auch ein quadratischer bzw. rechteckiger Querschnitt vorstellbar, der in seinen Abmessungen entsprechend auf das jeweils vorgesehen Stützorgan 8, 8/1 bis 8/3 abgestimmt ist.

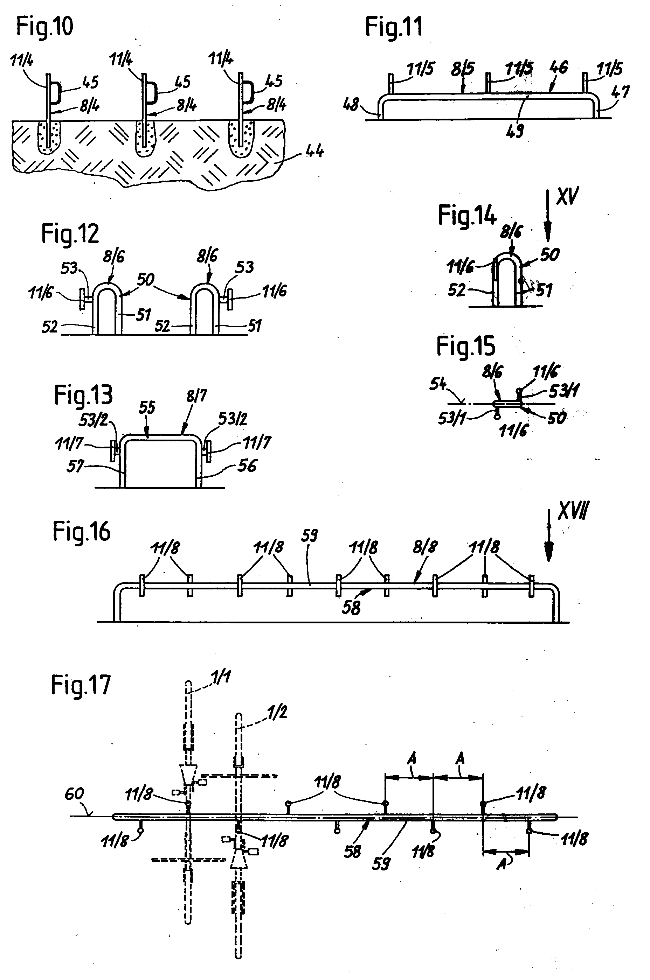

Die Fig. 9 bis 21 zeigen verschiedene Stützvorrichtungen. 8/4 bis 8/10.

Fig. 9 zeigt drei Stützvorrichtungen 8/4, die jeweils als einfaches Rohr ausgebildet im Untergrund 44 verankert sind und deren jeweilige obere Endbereich ein Aufnahmerohr 11/4 bildet.

Bei einer weiteren Ausführungsform gemäß Fig. 10 sind die drei Stützvorrichtungen 8/4 jeweils mit einem Sicherungsbügel 45 versehen. Dieser Sicherungsbügel 45 dient zum sicheren Anschließen eines Fahrrades beispielsweise mittels eines Ringschlosses oder dergleichen. Anstatt eines Sicherungsbügels 45 kann auch bekannterweise eine Sicherungskette, eine Sicherungsöse oder ein Sicherungsring vorgesehen sein.

Fig. 11 zeigt eine Ausführungsform, bei welcher eine Stützvorrichtung 8/5 in Form eines U-förmigen Rohrrahmens 46 vorgesehen ist. Dieser Rohrrahmen 46 ist mit seinen beiden U-Schenkeln 47, 48 gemäß dem Ausführungsbeispiel nach Fig. 10 im Boden fest verankert. Anstatt dieser Verankerung kann auch am unteren Ende des jeweiligen U-Schenkels 47, 48 gemäß Fig. 1 bzw. 2 eine Standplatte 9 bzw. 9/1 vorgesehen sein. Die Stützvorrichtung 8/5 weist auf seinem zwischen den U-Schenkeln 47, 48 wesentlichen horizontal verlaufenden Trägerrohr 49 drei Aufnahmerohre 11/5 auf. Die Aufnahmerohre 11/5 sind auf dem Trägerrohr 49 vertikal verlaufend und im Abstand voneinander angeordnet. Der Abstand ist dabei so gewählt, daß mehrere Fahrräder kollisionsfrei nebeneinander geparkt werden können.

Fig. 12 zeigt eine weitere Ausführungsform, bei welcher die Stützvorrichtung 8/6 als U-förmiger Rohrrahmen 50 ausgebildet ist, wobei das Aufnahmerohr 11/6 seitlich an einem der beiden U-Schenkel 51 bzw. 52 wahlweise angeordnet ist. Zur Vermeidung von Kollisionen von zu parkenden Fahrrädern mit dem Rohrrahmen 50 der Stützvorrichtung 8/6 sind die Aufnahmerohre 11/6 in seitlichen Abstand zum jeweiligen U-Schenkel 51 bzw. 52 angeordnet, wobei als Abstandhalter zum jeweiligen U-Schenkel 51, 52 jeweils ein Distanzrohr 53 vorgesehen ist. Bei der Ausführungsform gemäß Fig. 12 sind die jeweiligen Aufnahmerohre 11/6 und der jeweilige Rohrrahmen 50 in einer gemeinsamen Vertikalebene angeordnet.

Die Ausführungsform gemäß den Fig. 14 und 15 weist eine Stützvorrichtung 8/6 wie die Ausführungsform gemäß Fig. 12 auf. An den U-Schenkeln 51, 52 des U-förmigen Rohrrahmens 50 der Stützvorrichtung 8/6 ist jeweils ein Aufnahmerohr 11/6 angeordnet. Die Aufnahmerohre 11/6 sind einander gegenüberliegend in senkrechtem Abstand zur vom Rohrrahmen 50 aufgespannten Vertikalebene 54 angeordnet. Als Abstandshalter zur Verbindung des jeweiligen Aufnahmerohres 11/3 zum jeweiligen U-Schenkel 51 bzw. 52 ist jeweils ein Distanzrohr 53/1 vorgesehen.

Fig. 13 zeigt eine weitere Ausführungsform, bei welcher als Stützvorrichtung 8/7 ein U-förmiger Rohrrahmen 55 vorgesehen ist, an dessen beiden U-Schenkel 56, 57 jeweils ein Aufnahmerohr 11/7 in seitlichem Abstand angeordnet ist. Die Aufnahmerohre 11/7 sind wiederum mittels eines Distanzrohres 53/2 mit den jeweiligen U-Schenkeln 56 bzw. 57 verbunden.

Fig. 16 zeigt eine Stützvorrichtung 8/7, deren U-förmiger Rohrrahmen 58 an seinem Trägerrohr 59 Aufnahmerohre 11/8 aufweist. Die Aufnahmerohre 11/8 sind in senkrechtem Abstand zur vom Rohrrahmen 58 aufgespannten Vertikalebene 60 angeordnet, wobei sie sich abwechselnd gegenüberliegen. Der Abstand **A** der sich abwechselnd gegenüberliegenden Aufnahmerohre 11/8 ist so bemessen, daß zwei senkrecht zur Vertikalebene 60 in entgegengesetzter Richtung eingestellte Fahrräder 1/1, 1/2 (gestrichelt dargestellt) kollisionsfrei nebeneinander Platz finden.

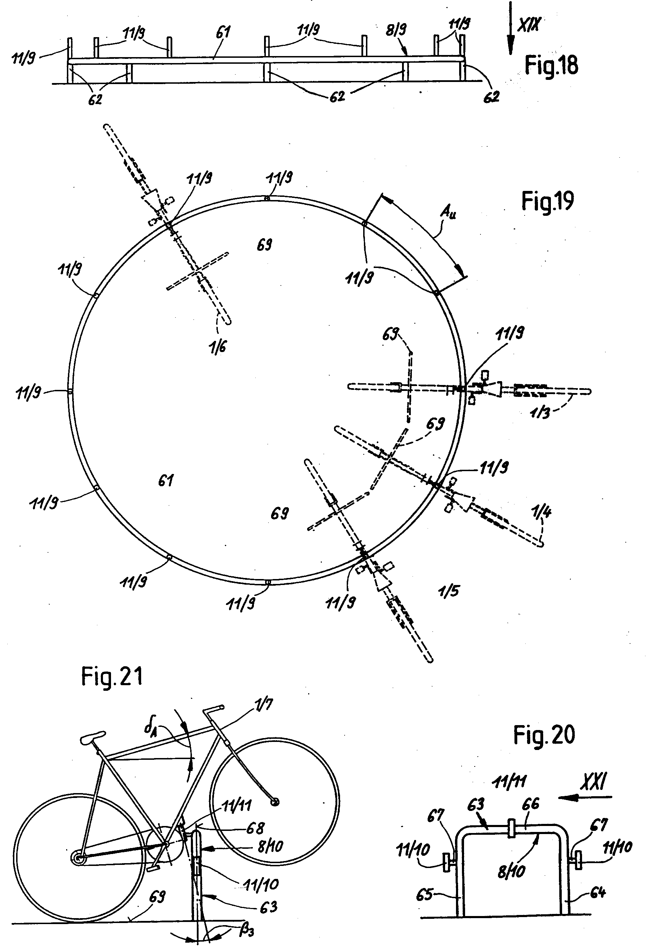

In Fig. 18 und 19 ist eine Ausführungsform einer Stützvorrichtung 8/9 dargestellt, welche ein ringförmiges Trägerrohr 61 aufweist, das mittels mehrerer Stützpfosten 62 ortsfest am Boden verankert ist. Auf dem Trägerrohr 61 sind mehrere vertikal verlaufende Aufnahmerohre 11/9 angeordnet. Der Umfangsabstand **A**_{**U**} der Aufnahmerohre 11/9 ist so gewählt, daß in radialer Richtung vorwärts eingestellte Fahrräder 1/3, 1/4, 1/5, 1/6 (gestrichelte dargestellt Fig. 19) nicht mit ihren Lenkstangen 69 kollidieren können.

Bei einer weiteren Ausführungsform gemäß Fig. 20 und 21 besteht die Stützvorrichtung 8/10 aus einem U-förmigen Rohrrahmen 63, bei welchem sowohl an dessen U-Schenkeln 64, 65 als auch an dessen Trägerrohr 66 jeweils ein Aufnahmerohr 11/10 bzw. 11/11 angeordnet ist. Die Aufnahmerohre 11/10 der U-Schenkel 64, 65 liegen dabei in einer gemeinsamen, vom Rohrrahmen 63 aufgespannten Vertikalebene 68 und sind in seitlichen Abstand mittels jeweils eines Distanzrohres 67 am jeweiligen U-Schenkel 64 bzw. 65 angeordnet. Die Aufnahmerohre 11/10 sind dabei in einer Höhe angeordnet, die es erlauben, ein Fahrrad mit seinem an ihm angeordneten Stützorgan auf beiden Rädern stehend aufzunehmen.

Das Trägerrohr 66 verläuft horizontal oberhalb der Aufnahmerohre 11/10, wobei dessen Aufnahmerohr 11/11 in senkrechtem Abstand zur Vertikalebene 68 des Rohrrahmens 63 angeordnet ist. Das Aufnahmerohr 11/11 weist dabei zur Vertikalebene 68 einen Neigungswinkel β_{**3**} auf, der dem Anstellwinkel δ_{**A**} eines mit seinem Stützorgan 6/11 in das Aufnahmerohr 11/11 eingestellten Fahrrades entspricht. In dieser Position steht das geparkte Fahrrad 1/7 bei angehobenem Vorderrad lediglich mit seinem Hinterrad auf dem Boden 69. Diese Ausführungsform hat den Vorteil, daß mehrere Fahrräder auf engstem Raum geparkt werden können, ohne daß beim Einstellen zwischen den Fahrrädern die Gefahr einer Kollision besteht.

## Patentansprüche

1. Parkhalter für Zweiräder, insbesondere für Fahrräder, bestehend aus einem am Rahmen des Zweirades festsitzend befestigten, nach unten gerichteten Stützelement (6, 6/1, 6/2, 6/3) und einer am Boden ortsfest verankerten Stützvorrichtung (8, 8/1 - 8/10), wobei das Stützelement und die Stützvorrichtung bei mit wenigstens einem Rad auf dem Boden stehenden Zweirad miteinander in Eingriff bringbar sind,
**dadurch gekennzeichnet**,
daß das Stützelement (6, 6/1, 6/2, 6/3) ein im wesentlichen vertikal verlaufendes, stab-, platten- oder bügelartiges Stützorgan (7, 7/1, 7/2, 7/3) aufweist, und
daß die Stützvorrichtung (8, 8/1 bis 8/10) mit wenigstens einem im wesentlichen vertikal verlaufenden, oberseitig offenen Aufnahmerohr (11, 11/1 bis 11/11) versehen ist, in welches das Stützorgan (8, 8/1 bis 8/10) unmittelbar und mit geringem Spiel passend von oben einsteckbar ist, so daß das Aufnahmerohr (11, 11/1 bis 11/11) das Stützorgan (8, 8/1 bis 8/10) horizontal allseitig umschließt.

2. Parkhalter nach Anspruch 1, dadurch gekennzeichnet, daß das Stützorgan (7/2) in Form eines Stützzapfens (14/2) am Stützelement (6/2) um eine quer zur vertikalen Zweiradlängsmittelebene (19/1) verlaufende Schwenkachse (28) um etwa 5° in beide Richtungen aus seiner vertikalen Lage schwenkbar gelagert ist, und
daß der Stützzapfen (14/2) in seiner jeweiligen Schwenkposition beliebig feststellbar ist.

3. Parkhalter nach Anspruch 1, dadurch gekennzeichnet, daß das Stützorgan (7/3) als Stützplatte (39) ausgebildet ist, welche vertikal nach unten gerichtet, parallel zur vertikalen Zweirad-Längsmittelebene (19/3) verläuft,
daß die Vorder- bzw. Hinterkante (40 bzw. 41) der Stützplatte (39) von oben nach unten aufeinander zulaufend zur vertikalen Stützplatten-Quermittelebene (38) jeweils einen Winkel β₁ bzw. β₂ von etwa 5° bilden, und
daß das Aufnahmerohr (11/3) eine auf den Stützplattenquerschnitt abgestimmte längliche Querschnittsform aufweist.

4. Parkhalter nach Anspruch 3, dadurch gekennzeichnet, daß die Stützplatte (39) mit ihrer Stützplatten-Längsmittelebene (39') um einen Wert **B**_{**V**}, der maximal etwa der halben Rahmenrohrbreite **B/2** entspricht, seitlich versetzt zur Zweirad-Längsmittelebene (19/3) angeordnet ist.

5. Parkhalter nach einem der Ansprüche 1 bis 3, dadurch gekennzeichnet, daß das Aufnahmerohr (11/4) und die Stützvorrichtung (8/4) ein einzelnes Standrohr bilden, welches ortsfest im Untergrund (44) verankert ist.

6. Parkhalter nach Anspruch 4, dadurch gekennzeichnet, daß die Stützvorrichtung (8, 8/1) an seinem unteren Ende mit einer Standplatte (9, 9/1) versehen ist, welche auf dem Untergrund befestigbar ist.

7. Parkhalter nach einem der Ansprüche 1 bis 5, dadurch gekennzeichnet, daß die Stützvorrichtung (8/4) mit einem Sicherungsbügel (45), einer Sicherungskette, einer Sicherungsöse oder einem Sicherungsring versehen ist, an welche ein Zweirad (1, 1/1 bis 1/7) diebstahlsicher anschließbar ist.

8. Parkhalter nach einem der Ansprüche 1 bis 3 oder 6, dadurch gekennzeichnet, daß die Stützvorrichtung (8/5 bis 8/8) aus einem U-förmigen Rohrrahmen (46, 50, 58) besteht, welcher mit seinen vertikalen U-Schenkeln (47, 48; 51, 52) ortsfest im Untergrund verankert ist.

9. Parkhalter nach einem der Ansprüche 1 bis 3 oder 6, dadurch gekennzeichnet, daß die U-Schenkel (47, 48; 51, 52) an ihrem jeweiligen unteren Ende jeweils mit einer Standplatte versehen sind, welche auf dem Untergrund befestigbar ist.

10. Parkhalter nach Anspruch 7, dadurch gekennzeichnet, daß der Rohrrahmen (46) auf seinem zwischen den U-Schenkeln (47, 48) horizontal verlaufenden Trägerrohr (49) mehrere im Abstand zueinander, in einer gemeinsamen vom Rohrrahmen (46) aufgespannten Vertikalmittelebene angeordnete Aufnahmerohre (11/5) aufweist.

11. Parkhalter nach Anspruch 7, dadurch gekennzeichnet, daß an wenigstens einem der U-Schenkel (51, 52; 56, 57) des Rohrrahmens (50, 55) in der vom Rohrrahmen (50, 55) aufgespannten Vertikalmittelebene ein Aufnahmerohr (11/6, 11/7) in seitlichen Abstand zum jeweiligen U-Schenkel (51, 52; 56, 57) angeordnet ist.

12. Parkhalter nach Anspruch 7, dadurch gekennzeichnet, daß an den U-Schenkeln (51, 52) und/oder am Trägerrohr (59) jeweils Aufnahmerohre (11/6, 11/8) in senkrechtem Abstand zur vom Rohrahmen (50, 58) aufgespannten Vertikalmittelebene (60) und in seitlichen Abstand voneinander angeordnet sind.

## Claims

1. Parking stand for two-wheel vehicles, in particular bicycles, comprising a downwards pointing support element (6, 6/1, 6/2, 6/3) secured to the frame of the bicycle, and a support device (8, 8/1 - 8/10) secured to the ground, wherein the support element and the support device can be brought into engagement with a bicycle standing on the ground with at least one wheel, characterised in that the support element (6, 6/1, 6/2, 6/3) comprises an essentially vertical, rod-shaped, plate-shaped or stirrup-shaped support member (7, 7/1, 7/2, 7/3), and in that the support device (8, 8/1 to 8/10) is provided with at least one essentially vertical mounting pipe (11, 11/1 to 11/11) which is open at the top, into which the support member (8, 8/1, to 8/10) can be inserted directly from the top fitting with a small amount of play, so that the mounting pipe (11, 11/1 to 11/11) surrounds the support member (8, 8/1 to 8/10) horizontally on all sides.

2. Parking stand according to claim 1, characterised in that the support member (7/2) in the form of a support pin (14/2) is mounted on the support element (6/2) able to be pivoted by about 5° in both directions from its vertical position about a pivotal axis (28) at right angles to the vertical bicycle longitudinal middle plane (19/1), and in that the support pin (14/2) can be secured in its respective pivotal position as desired.

3. Parking stand according to claim 1, characterised in that the support member (7/3) is designed as a support plate (39), which is oriented vertically downwards and runs parallel to the vertical bicycle longitudinal middle plane (19/3), in that the front and rear edge (40 and 41) of the support plate (39) running towards one another from the top to the bottom form an angle β₁ or β₂ of about 5° respectively to the vertical support plate middle plane (38) and in that the mounting pipe (11/3) has a longitudinal cross sectional form corresponding to the support plate cross section.

4. Parking stand according to claim 3, characterised in that the support plate (39) with its support plate longitudinal middle plane (39') is arranged laterally off-set relative to the bicycle longitudinal middle plane (19/3) by a value Bᵥ, which corresponds to a maximum of half the frame pipe width B/2.

5. Parking stand according to one of claims 1 to 3, characterised in that the mounting pipe (11/4) and the support device (8/4) form a single standing pipe which is anchored securely underground (44).

6. Parking stand according to claim 4, characterised in that the support device (8, 8/1) is provided at its bottom end with a standing plate (9, 9/1) which can be secured to the ground.

7. Parking stand according to one of claims 1 to 5, characterised in that the support device (8/4) is provided with a safety stirrup (45), a safety chain, a safety loop or a safety ring to which a bicycle (1, 1/1 to 1/7) can be connected in a thief-proof manner.

8. Parking stand according to one of claims 1 to 3 or 6, characterised in that the support device (8/5 to 8/8) comprises a U-shaped pipe frame (46, 50, 58) which is anchored securely with its vertical U-arms (47, 48; 51, 52) to the ground.

9. Parking stand according to one of claims 1 to 3 or 6, characterised in that the U-arms (47, 48; 51, 52) are provided at their respective bottom end with a standing plate which can be secured to the ground.

10. Parking stand according to claim 7, characterised in that the pipe frame (46) on its support pipe (49) running horizontally between the U-arms (47, 48) has several spaced apart mounting pipes (11/5) arranged in a vertical middle plane all mounted on the pipe frame (46).

11. Parking stand according to claim 7, characterised in that on at least one of the U-arms (51, 52; 56, 57) of the pipe frame (50, 55) in the vertical middle plane of the mounting frame (50, 55) a mounting pipe (11/6, 11/7) is arranged in lateral distance to the respective U-arm (51, 52; 56, 57).

12. Parking stand according to claim 7, characterised in that to the U-arms (51, 52) and/or the support pipe (59) respectively mounting pipes (11/6, 11/8) are arranged in vertical distance to the vertical middle plane (60) of the pipe frame (50, 58) and in lateral distance from one another.

## Revendications

1. Support de stationnement pour véhicules à deux roues, en particulier pour bicyclettes, comprenant un élément de support (6, 6/1, 6/2, 6/3) solidarisé avec le cadre du véhicule à deux roues et dirigé vers le bas, et un dispositif de support (8, 8/1 à 8/10) ancré dans le sol, l'élément de support et le dispositif de support pouvant être mis en prise l'un avec l'autre pour un véhicule à deux roues dont au moins une roue repose sur le sol, **caractérisé en ce** que l'élément de support (6, 6/1, 6/2, 6/3) comporte un organe de support (7, 7/1, 7/2, 7/3) sensiblement vertical en forme de barre, de plaque ou d'étrier, et que le dispositif de support (8, 8/1 à 8/10) est muni d'au moins un tube de réception (11, 11/1 à 11/11) sensiblement vertical ouvert sur le dessus dans lequel l'organe de support (8, 8/1 à 8/10) peut être emboîté directement par le haut de manière ajustée et avec un faible jeu, de sorte que le tube de réception (11, 11/1 à 11/11) entoure l'organe de support (8, 8/1 à 8/10) horizontalement de tout côté.

2. Support de stationnement selon la revendication 1, caractérisé en ce que l'élément de support (7/2) sous la forme d'un tourillon de support (14/2) sur l'élément de support (6/2) est monté de façon à pouvoir pivoter d'environ 5° dans les deux sens, hors de sa position verticale, autour d'un axe de pivotement (28) orienté transversalement au plan médian longitudinal vertical (19/1) du véhicule à deux roues, et que le tourillon de support (14/2) peut être bloqué, à volonté, dans sa position de pivotement respective.

3. Support de stationnement selon la revendication 1, caractérisé en ce que l'organe de support (7/3) est conformé en plaque d'appui (39) qui, dirigée verticalement vers le bas, s'étend parallèlement au plan médian longitudinal vertical (19/3) du véhicule à deux roues, que le bord antérieur et respectivement postérieur (40 et respectivement 41) de la plaque d'appui (39) qui convergent l'un vers l'autre de haut en bas, forment respectivement avec le plan médian transversal (38) de la plaque d'appui un angle β₁ ou β₂ d'environ 5°, et que le tube de réception (11/3) présente une section transversale de forme allongée qui est adaptée à la section transversale de la plaque d'appui.

4. Support de stationnement selon la revendication 3, caractérisé en ce que le plan médian longitudinal (39') de la plaque d'appui (39) est décalé latéralement par rapport au plan médian longitudinal (19/3) du véhicule à deux roues d'une valeur Bᵥ qui correspond au maximum à environ la moitié de la largeur B/2 du tube de cadre.

5. Support de stationnement selon l'une des revendications 1 à 3, caractérisé en ce que le tube de réception (11/4) et le dispositif de support (8/4) forment un seul tube vertical qui est solidement ancré dans le matériau de réception (44).

6. Support de stationnement selon la revendication 4, caractérisé en ce que le dispositif de support (8, 8/1) est muni à son extrémité inférieure d'une plaque d'appui (9, 9/1) qui peut être fixée sur le matériau de réception.

7. Support de stationnement selon l'une des revendications 1 à 5, caractérisé en ce que le dispositif de support (8/4) comporte un étrier de verrouillage (45), une chaîne de sécurité , un oeillet de sécurité ou un anneau de sécurité sur lesquels un véhicule à deux roues (1, 1/1 à 1/7) peut être attaché de manière à assurer la protection contre le vol.

8. Support de stationnement selon l'une des revendications 1 à 3 ou 6, caractérisé en ce que le dispositif de support (8/5 à 8/8) est constitué par un cadre tubulaire (46, 50, 58) en forme de U dont les branches verticales (47, 48 ; 51, 52) sont solidement ancrées dans le matériau de réception.

9. Support de stationnement selon l'une des revendications 1 à 3 ou 6, caractérisé en ce que les branches (47, 48 ; 51, 52) du profilé en U sont respectivement équipées à leur extrémité inférieure d'une plaque d'appui qui peut être fixée sur le matériau de réception.

10. Support de stationnement selon la revendication 7, caractérisé en ce que le cadre tubulaire (46) porte sur son tube porteur (49) orienté horizontalement entre les branches (47, 48) du profilé en U, plusieurs tubes de réception (11/5) disposés à distance les uns des autres dans un plan médian vertical commun défini par le cadre tubulaire (46).

11. Support de stationnement selon la revendication 7, caractérisé en ce qu'au moins l'une des branches (51, 52 ; 56, 57) du cadre tubulaire (50, 55) en U porte dans le plan médian vertical défini par le cadre tubulaire (50, 55) un tube de réception (11/6, 11/7) disposé à distance latérale de la branche respective (51, 52 ; 56, 57) du profilé en U.

12. Support de stationnement selon la revendication 7, caractérisé en ce que les branches (51, 52) du profilé en U et/ou le tube porteur (59) portent respectivement des tubes de réception (11/6, 11/8) disposés à distance verticale du plan médian vertical (60) défini par le cadre tubulaire (50, 58), et à distance latérale les uns des autres.
